# EUROPEAN PATENT APPLICATION

(11) **EP 3 766 727 A1**
(43) Date of publication of application: **20.01.2021**
(21) Application number: 20179872.5
(22) Date of filing: 15.06.2020
(51) Int. Cl.: B60L 53/14

(54) **DUAL AC DC CHARGING DEVICE FOR AN ELECTRIC VEHICLE BATTERY**

(30) Priority: 16.07.2019 JP 2019130876
(71) Applicant: YAZAKI CORPORATION, Minato-ku, Tokyo 108-8333 (JP)
(72) Inventor: MARUYAMA, Akinori, Susono-shi, Shizuoka 410-1194 (JP)
(74) Representative: Grünecker Patent- und Rechtsanwälte PartG mbB

(57) **Abstract**

In a power supply device (1), a common power supply terminal (32) has a shape connectable in common to a power supply terminal of a direct-current power supply (DC) installed outside a vehicle (V) and a power supply terminal of an alternating-current power supply (AC) installed outside the vehicle (V). An AC power supply line connects the common power supply terminal (32) and a battery (10) through an AC/DC conversion unit (60). A DC power supply line connects the common power supply terminal (32) and the battery (10) not through the AC/DC conversion unit (60). A controller (80) makes a switch to the DC power supply line when a power supply connected to the common power supply terminal (32) is the direct-current power supply (DC) and makes a switch to the AC power supply line when the power supply connected to the common power supply terminal (32) is the alternating-current power supply (AC) to charge the battery (10) with power input to the common power supply terminal (32).

## Description

### BACKGROUND OF THE INVENTION

### 1. Field of the Invention

The present invention relates to a power supply device.

### 2. Description of the Related Art

For example, Japanese Patent Application Laid-open No. 2015-100185 describes an electric vehicle provided with an AC inlet for AC charging and a DC inlet for DC charging as a conventional power supply device. The plurality of inlets enables the electric vehicle to adapt to an AC power supply and a DC power supply.

However, there is a possibility in the electric vehicle described in Japanese Patent Application Laid-open No. 2015-100185 that, for example, the plurality of inlets upsizes the power supply device, and the electric vehicle is susceptible to further improvement in this point.

### SUMMARY OF THE INVENTION

Thus, the present invention has been made in view of the above, and an object thereof is to provide a power supply device capable of selectively using a direct-current power supply and an alternating-current power supply in an appropriate manner.

In order to solve the above mentioned problem and achieve the object, a power supply device according to one aspect of the present invention includes a battery mounted on a vehicle and configured to store power; a common power supply terminal having a shape connectable in common to a power supply terminal of a direct-current power supply installed outside the vehicle and a power supply terminal of an alternating-current power supply installed outside the vehicle, the common power supply terminal being connected to either the power supply terminal of the direct-current power supply or the power supply terminal of the alternating-current power supply to input power in charging; an AC/DC conversion unit configured to convert AC power input to the common power supply terminal to DC power; an AC power supply line configured to connect the common power supply terminal and the battery through the AC/DC conversion unit; a DC power supply line configured to connect the common power supply terminal and the battery not through the AC/DC conversion unit; a switching unit configured to switch a path of current flowing from the common power supply terminal to the battery to either the DC power supply line or the AC power supply line; and a controller configured to control the switching unit based on a result of determination whether a power supply connected to the common power supply terminal is the direct-current power supply or the alternating-current power supply, wherein the controller makes a switch to the DC power supply line when the power supply connected to the common power supply terminal is the direct-current power supply and makes a switch to the AC power supply line when the power supply connected to the common power supply terminal is the alternating-current power supply to charge the battery with power input to the common power supply terminal.

According to another aspect of the present invention, in the power supply device, it is preferable that the power supply device includes a common communication terminal connectable to a communication terminal of the direct-current power supply and connectable to a communication terminal of the alternating-current power supply, the common communication terminal being configured to input a signal from the direct-current power supply and the alternating-current power supply, wherein the controller receives a signal indicating whether the power supply connected to the common power supply terminal is the direct-current power supply or the alternating-current power supply through the common communication terminal.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration example of a power supply device according to an embodiment;
FIG. 2 is a block diagram illustrating an operation example (No. 1) of the power supply device according to the embodiment;
FIG. 3 is a block diagram illustrating an operation example (No. 2) of the power supply device according to the embodiment; and
FIG. 4 is a flowchart illustrating an operation example of the power supply device according to the embodiment.

### DETAILED DESCRIPTION OF THE PREFERRED EMBODIMENTS

A mode for carrying out the present invention (embodiment) will be described in detail with reference to the drawings. It should be noted that the present invention is not limited to the description in the following embodiment. Further, elements described below include ones readily conceivable by those skilled in the art and substantially identical ones. Furthermore, configurations described below can be appropriately combined. In addition, various omissions, replacements, or modifications of the configurations can be performed without departing from the gist of the present invention.

### Embodiment

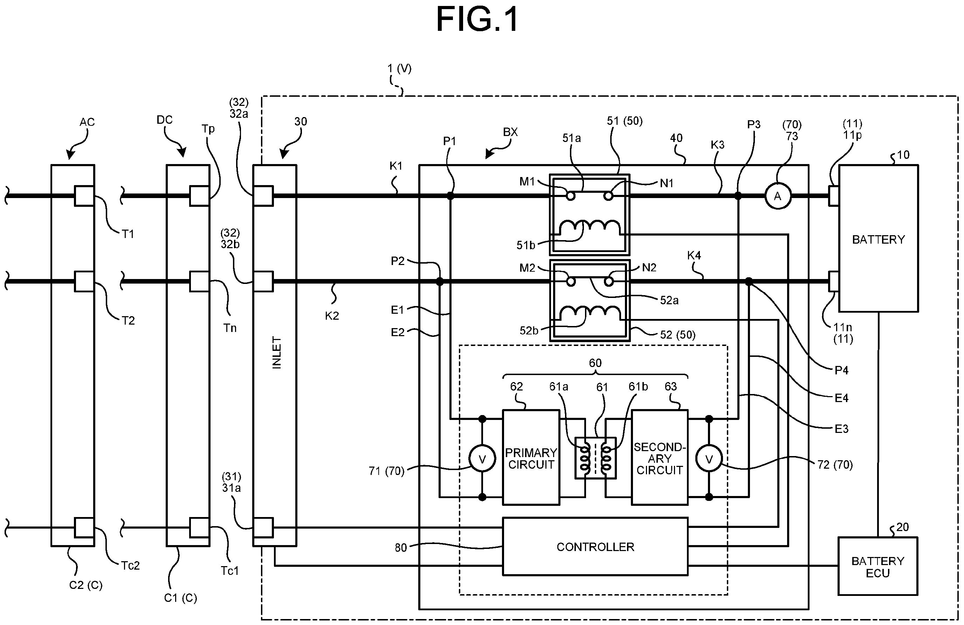

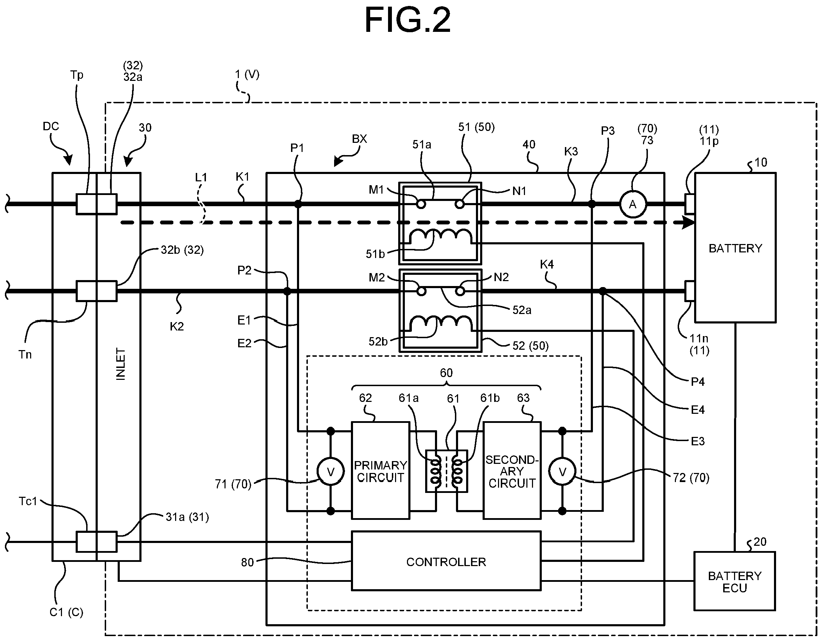

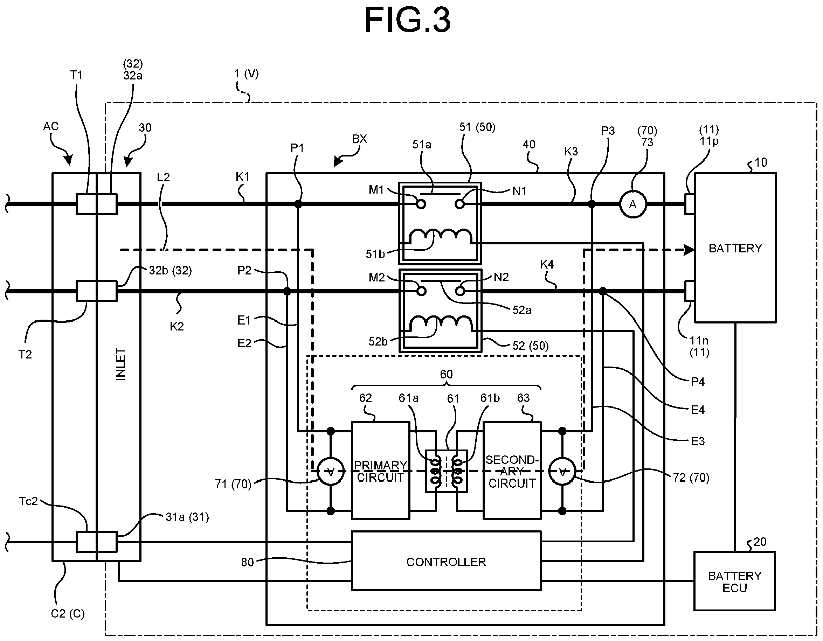

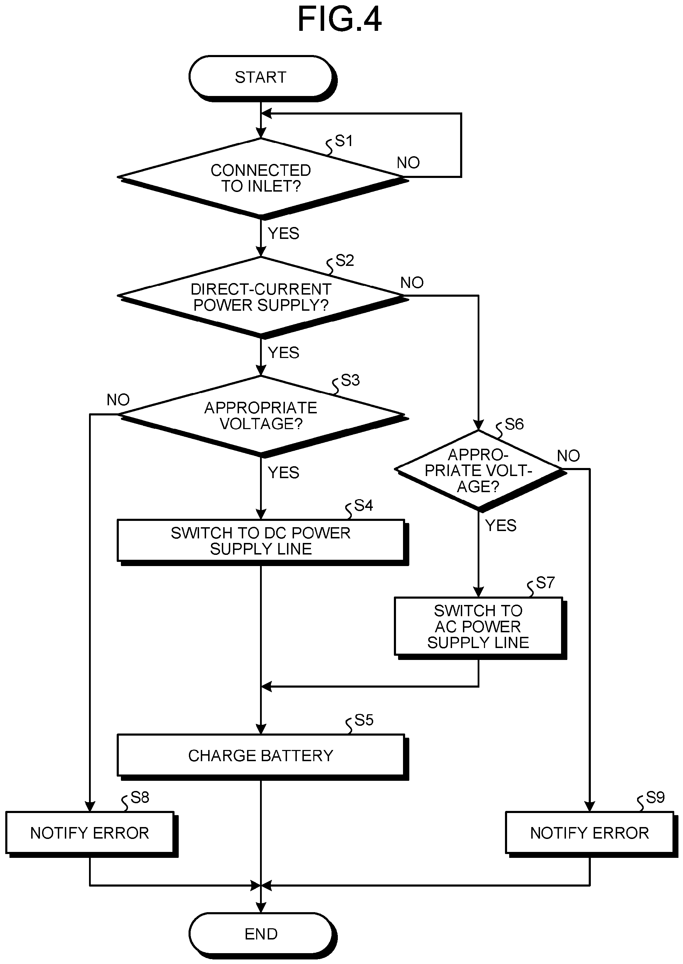

A power supply device 1 according to the embodiment will be described with reference to the drawings. FIG. 1 is a block diagram illustrating a configuration example of the power supply device 1 according to the embodiment. FIG. 2 is a block diagram illustrating an operation example (No. 1) of the power supply device 1 according to the embodiment. FIG. 3 is a block diagram illustrating an operation example (No. 2) of the power supply device 1 according to the embodiment. FIG. 4 is a flowchart illustrating an operation example of the power supply device 1 according to the embodiment. The power supply device 1 is mounted on a vehicle V. The power supply device 1 charges a battery 10 with power supplied from an external charger which is installed outside the vehicle V and supplies the charged power to a load unit (not illustrated). Hereinbelow, the power supply device 1 will be described in detail.

As illustrated in FIG. 1, the power supply device 1 is provided with, for example, the battery 10, a battery ECU (Electronic Control Unit) 20, an inlet 30, and a power supply box BX.

The battery 10 is a storage battery chargeable and dischargeable with DC power, and includes a plurality of battery cells. Each of the battery cells includes a chargeable and dischargeable secondary battery. For example, each of the battery cells includes a lithium ion battery. Each adjacent ones of the battery cells are connected in series to each other. The battery 10 is connected to the power supply box BX and the load unit. The battery 10 is charged with (stores) power supplied through the power supply box BX and supplies the charged power to the load unit. The battery 10 is connected to the battery ECU 20, and the battery ECU 20 monitors the remaining capacity and the like of the battery 10.

The battery ECU 20 monitors the battery 10. The battery ECU 20, for example, monitors the total voltage and the remaining capacity of the battery 10, input and output current, and voltage of each of the battery cells of the battery 10. The battery ECU 20 is connected to a controller 80 of the power supply box BX, and outputs a monitoring result of the battery 10 to the controller 80.

The inlet 30 is a charging port to which a direct-current power supply DC and an alternating-current power supply AC as external chargers can be connected. The inlet 30 is provided with an opening (not illustrated) into which a connector C of the external charger is inserted, a cover (not illustrated) which closes the opening, a lock mechanism (not illustrated), a common communication terminal 31, and a common power supply terminal 32. The inlet 30 is connected to the external charger by inserting the connector C of the external charger into the opening.

The lock mechanism blocks the insertion of the connector C of the external charger into the opening. The lock mechanism, for example, closes the opening with the cover to block the insertion of the connector C of the external charger into the opening. The lock mechanism is connected to the controller 80, and closes the opening with the cover when receiving a lock driving signal from the controller 80.

The common communication terminal 31 includes a communication contact 31a. The communication contact 31a is connectable to a communication terminal Tc1 of the direct-current power supply DC and connectable to a communication terminal Tc2 of the alternating-current power supply AC. In other words, the communication contact 31a is a common contact connectable to both the communication terminal Tc1 of the direct-current power supply DC and the communication terminal Tc2 of the alternating-current power supply AC. For example, the communication contact 31a is connected to the communication terminal Tc1 of the direct-current power supply DC and inputs a signal from the direct-current power supply DC in a state in which a connector C1 of the direct-current power supply DC is inserted in the opening of the inlet 30. Further, the communication contact 31a is connected to the communication terminal Tc2 of the alternating-current power supply AC and inputs a signal from the alternating-current power supply AC in a state in which a connector C2 of the alternating-current power supply AC is inserted in the opening of the inlet 30.

The common power supply terminal 32 is connected to the power supply terminals of the direct-current power supply DC and the alternating-current power supply AC. The common power supply terminal 32 has a shape connectable in common to the power supply terminal (a positive electrode terminal Tp and a negative electrode terminal Tn) of the direct-current power supply DC and the power supply terminal (a first terminal T1 and a second terminal T2) of the alternating-current power supply AC. The common power supply terminal 32 includes a first power supply contact 32a and a second power supply contact 32b. The first power supply contact 32a is connectable to the positive electrode terminal Tp of the direct-current power supply DC, and the second power supply contact 32b is connectable to the negative electrode terminal Tn of the direct-current power supply DC. Further, the first power supply contact 32a is connectable to the first terminal T1 of the alternating-current power supply AC, and the second power supply contact 32b is connectable to the second terminal T2 of the alternating-current power supply AC. In other words, the first power supply contact 32a and the second power supply contact 32b are common contacts respectively connectable to both the positive electrode terminal Tp of the direct-current power supply DC and the first terminal T1 of the alternating-current power supply AC and both the negative electrode terminal Tn of the direct-current power supply DC and the second terminal T2 of the alternating-current power supply AC.

Each of the first power supply contact 32a and the second power supply contact 32b is connected to either the power supply terminal of the direct-current power supply DC or the power supply terminal of the alternating-current power supply AC in charging. For example, the first power supply contact 32a and the second power supply contact 32b are respectively connected to the positive electrode terminal Tp and the negative electrode terminal Tn of the direct-current power supply DC and input power from the direct-current power supply DC in a state in which the connector C1 of the direct-current power supply DC is inserted in the opening of the inlet 30. Further, the first power supply contact 32a and the second power supply contact 32b are respectively connected to the first terminal T1 and the second terminal T2 of the alternating-current power supply AC and input power from the alternating-current power supply AC in a state in which the connector C2 of the alternating-current power supply AC is inserted in the opening of the inlet 30.

The power supply box BX supplies power input from the inlet 30 to the battery 10. The power supply box BX is provided with a housing 40, a DC power supply line L1, an AC power supply line L2, a switching unit 50, an AC/DC conversion unit 60, a detection unit 70, and the controller 80.

The housing 40 is made of a material such as resin, and houses various electronic components therein. The housing 40 houses, for example, the switching unit 50, the AC/DC conversion unit 60, the detection unit 70, and the controller 80 therein as the various electronic components.

As illustrated in FIG. 2, the DC power supply line L1 is a path that connects the common power supply terminal 32 of the inlet 30 and an electrode terminal 11 of the battery 10 not through the AC/DC conversion unit 60. The DC power supply line L1 includes, for example, connection lines K1, K2, which connect the inlet 30 and the switching unit 50, and connection lines K3, K4, which connect the switching unit 50 and the battery 10. Specifically, the DC power supply line L1 includes the connection line K1, which connects the first power supply contact 32a of the inlet 30 and a relay 51, the connection line K2, which connects the second power supply contact 32b of the inlet 30 and a relay 52, the connection line K3, which connects a positive electrode 11p of the battery 10 and the relay 51, and the connection line K4, which connects a negative electrode 11n of the battery 10 and the relay 52.

As illustrated in FIG. 3, the AC power supply line L2 is a path that connects the common power supply terminal 32 of the inlet 30 and the electrode terminal 11 of the battery 10 through the AC/DC conversion unit 60. The AC power supply line L2 branches at branch points P1, P2, which are located between the inlet 30 and the switching unit 50, and merges at merging points P3, P4, which are located between the switching unit 50 and the battery 10. The AC power supply line L2 partially shares lines with the DC power supply line L1 illustrated in FIG. 2. The AC power supply line L2 includes, for example, a part of each of the connection lines K1, K2 of the DC power supply line L1, connection lines E1, E2 on the power input side of the AC/DC conversion unit 60, connection lines E3, E4 on the power output side of the AC/DC conversion unit 60, and a part of each of the connection lines K3, K4 of the DC power supply line L1.

Specifically, the AC power supply line L2 includes a part of the connection line K1 between the first power supply contact 32a of the inlet 30 and the branch point P1, the connection line K2 between the second power supply contact 32b of the inlet 30 and the branch point P2, the connection line E1, which connects the branch point P1 and the AC/DC conversion unit 60, and the connection line E2, which connects the branch point P2 and the AC/DC conversion unit 60. The AC power supply line L2 further includes the connection line E3, which connects the AC/DC conversion unit 60 and the merging point P3, the connection line E4, which connects the AC/DC conversion unit 60 and the merging point P4, a part of the connection line K3 between the merging point P3 and the positive electrode 11p of the battery 10, and a part of the connection line K4 between the merging point P4 and the negative electrode 11n of the battery 10.

The switching unit 50 makes a switch to either the DC power supply line L1 or the AC power supply line L2. The switching unit 50 is provided with the relay 51 and the relay 52. The relay 51 is disposed on the upstream side in the DC power supply line L1, and located between the first power supply contact 32a of the inlet 30 and the positive electrode 11p of the battery 10. The relay 51 includes a switch 51a and a coil 51b. The switch 51a includes a first contact M1 and a second contact N1. The first contact M1 is connected to the first power supply contact 32a of the inlet 30, and the second contact N1 is connected to the positive electrode 11p of the battery 10. The switch 51a connects the first power supply contact 32a of the inlet 30 and the positive electrode 11p of the battery 10 by connecting (turning ON) the first contact M1 and the second contact N1. On the other hand, the switch 51a cuts off the connection between the first power supply contact 32a of the inlet 30 and the positive electrode 11p of the battery 10 by cutting off (turning OFF) the first contact M1 and the second contact N1.

The coil 51b turns ON or OFF the switch 51a. The coil 51b is disposed facing the switch 51a, and turns ON or OFF the switch 51a by magnetic force. The coil 51b is connected to the controller 80, and turns ON the switch 51a by magnetic force when a relay driving signal is output from the controller 80. On the other hand, when no relay driving signal is output from the controller 80, no magnetic force acts on the coil 51b, and the switch 51a is kept OFF.

The relay 52 is disposed on the downstream side in the DC power supply line L1, and located between the second power supply contact 32b of the inlet 30 and the negative electrode 11n of the battery 10. The relay 52 includes a switch 52a and a coil 52b. The switch 52a includes a first contact M2 and a second contact N2. The first contact M2 is connected to the second power supply contact 32b of the inlet 30, and the second contact N2 is connected to the negative electrode 11n of the battery 10. The switch 52a connects the second power supply contact 32b of the inlet 30 and the negative electrode 11n of the battery 10 by connecting (turning ON) the first contact M2 and the second contact N2. On the other hand, the switch 52a cuts off the connection between the second power supply contact 32b of the inlet 30 and the negative electrode 11n of the battery 10 by cutting off (turning OFF) the first contact M2 and the second contact N2.

The coil 52b turns ON or OFF the switch 52a. The coil 52b is disposed facing the switch 52a, and turns ON or OFF the switch 52a by magnetic force. The coil 52b is connected to the controller 80, and turns ON the switch 52a by magnetic force when a relay driving signal is output from the controller 80. On the other hand, when no relay driving signal is output from the controller 80, no magnetic force acts on the coil 52b, and the switch 52a is kept OFF.

Further, the switching unit 50 connects the inlet 30 and the battery 10 not through the AC/DC conversion unit 60 by switching the relays 51, 52 to ON to switch a path of current flowing from the inlet 30 to the battery 10 to the DC power supply line L1. When the switching unit 50 switches the path to the DC power supply line L1, the switching unit 50 cuts off the AC power supply line L2. In other words, when the switching unit 50 switches the path to the DC power supply line L1, the switching unit 50 cuts off the path that connects the common power supply terminal 32 of the inlet 30 and the electrode terminal 11 of the battery 10 through the AC/DC conversion unit 60.

The switching unit 50 connects the inlet 30 and the battery 10 through the AC/DC conversion unit 60 by switching the relays 51, 52 to OFF to switch the path of current flowing from the inlet 30 to the battery 10 to the AC power supply line L2. When the switching unit 50 switches the path to the AC power supply line L2, the switching unit 50 cuts off the DC power supply line L1. In other words, when the switching unit 50 switches the path to the AC power supply line L2, the switching unit 50 cuts off the path that connects the common power supply terminal 32 of the inlet 30 and the electrode terminal 11 of the battery 10 not through the AC/DC conversion unit 60.

The AC/DC conversion unit 60 converts AC power to DC power. In the AC/DC conversion unit 60, the connection lines E1, E2 on the power input side of the AC/DC conversion unit 60 are respectively connected to the connection lines K1, K2, which connect the inlet 30 and the switching unit 50, at the branch points P1, P2, and the connection lines E3, E4 on the power output side of the AC/DC conversion unit 60 are respectively connected to the connection lines K3, K4, which connect the switching unit 50 and the battery 10, at the merging points P3, P4. In other words, in the AC/DC conversion unit 60, the connection lines E1, E2 on the power input side of the AC/DC conversion unit 60 respectively branch off from the connection lines K1, K2 between the inlet 30 and the switching unit 50, and the connection lines E3, E4 on the power output side respectively merge with the connection lines K3, K4 between the switching unit 50 and the battery 10.

The AC/DC conversion unit 60 is provided with an insulated transformer 61, a primary circuit 62, and a secondary circuit 63. The insulated transformer 61 transforms AC power, and includes a primary coil 61a and a secondary coil 61b. The primary coil 61a insulated from the secondary coil 61b is disposed facing the secondary coil 61b. The primary coil 61a is connected to the primary circuit 62, and AC power is output to the primary coil 61a from the primary circuit 62. The primary coil 61a transmits the power output from the primary circuit 62 to the secondary coil 61b by electromagnetic induction. The secondary coil 61b is connected to the secondary circuit 63, and outputs the power transmitted from the primary coil 61a to the secondary circuit 63 by electromagnetic induction.

The primary circuit 62 is a circuit that converts AC power input through the inlet 30 to another AC power. For example, the primary circuit 62 temporarily rectifies the AC power input through the inlet 30 to DC power by a rectifier circuit (not illustrated), and converts the rectified DC power to another AC power by a switching element (not illustrated). The primary circuit 62 outputs the converted AC power to the primary coil 61a. Note that the primary circuit 62 prevents a short circuit of the direct-current power supply DC through the AC/DC conversion unit 60 by keeping the switching element OFF when the direct-current power supply DC is connected to the inlet 30 to supply power to the battery 10 through the DC power supply line L1.

The secondary circuit 63 is a circuit that rectifies and smooths AC power output from the secondary coil 61b. For example, the secondary circuit 63 rectifies AC power output from the secondary coil 61b to DC power by a rectifier circuit (not illustrated), smooths the rectified DC power by a smoothing circuit (not illustrated), and outputs the smoothened DC power to the battery 10.

The detection unit 70 detects a detection target of the power supply device 1. The detection unit 70 is provided with a terminal voltage sensor 71, a battery voltage sensor 72, and a current sensor 73. The terminal voltage sensor 71 is a sensor that detects a voltage applied to the common power supply terminal 32. The terminal voltage sensor 71 has one end connected to the connection line E1 on the power input side of the AC/DC conversion unit 60 and the other end connected to the connection line E2 on the power input side of the AC/DC conversion unit 60. The terminal voltage sensor 71 detects a DC voltage applied to the common power supply terminal 32 of the inlet 30 when the direct-current power supply DC is attached to the inlet 30 to supply power to the battery 10 through the DC power supply line L1. Further, the terminal voltage sensor 71 detects an AC voltage applied to the common power supply terminal 32 of the inlet 30 when the alternating-current power supply AC is attached to the inlet 30 to supply power to the battery 10 through the AC power supply line L2. The terminal voltage sensor 71 is connected to the controller 80, and outputs the detected voltage to the controller 80.

The battery voltage sensor 72 is a sensor that detects a voltage applied to the battery 10. The battery voltage sensor 72 has one end connected to the connection line E3 on the power output side of the AC/DC conversion unit 60 and the other end connected to the connection line E4 on the power output side of the AC/DC conversion unit 60. The battery voltage sensor 72 detects a voltage applied to the battery 10 by the direct-current power supply DC when the direct-current power supply DC is attached to the inlet 30 to supply power to the battery 10 through the DC power supply line L1. Further, the battery voltage sensor 72 detects a voltage applied to the battery 10 by the alternating-current power supply AC through the AC/DC conversion unit 60 when the alternating-current power supply AC is attached to the inlet 30 to supply power to the battery 10 through the AC power supply line L2. The battery voltage sensor 72 is connected to the controller 80, and outputs the detected voltage to the controller 80.

The current sensor 73 is a sensor that detects a current flowing to the battery 10. The current sensor 73 is disposed on the connection line K3, which connects the positive electrode 11p of the battery 10 and the relay 51. The current sensor 73 detects a current flowing to the positive electrode 11p of the battery 10 on the DC power supply line L1 and the AC power supply line L2. The current sensor 73 is connected to the controller 80, and outputs the detected current to the controller 80.

The power supply device 1 is capable of detecting voltage and current using the terminal voltage sensor 71, the battery voltage sensor 72, and the current sensor 73 on the DC power supply line L1 and the AC power supply line L2. Accordingly, the power supply device 1 can share each of the sensors between the DC power supply line L1 and the AC power supply line L2. Thus, it is possible to reduce (halve) the number of sensors compared to a conventional power supply device.

The controller 80 controls various electronic components. The controller 80 includes an electronic circuit mainly including a known microcomputer which includes a CPU, a ROM and a RAM which constitute a storage unit, and an interface. When the controller 80 charges the battery 10, the controller 80 charges the battery 10 on the basis of the voltage detected by the battery voltage sensor 72 and the current detected by the current sensor 73.

The controller 80 is connected to the AC/DC conversion unit 60, and controls the AC/DC conversion unit 60. For example, the controller 80 controls ON/OFF of the switching element of the primary circuit 62 to convert DC power rectified by the rectifier circuit to AC power.

The controller 80 is connected to the inlet 30, and controls the lock mechanism of the inlet 30. For example, when the switches 51a, 52a of the relays 51, 52 are fused to cause an ON-fixed fault at the end of charging, the controller 80 drives the lock mechanism and transmits the lock driving signal for closing the opening with the cover of the lock mechanism to the lock mechanism.

The controller 80 receives an identification signal indicating that the direct-current power supply DC or the alternating-current power supply AC has been connected through the common communication terminal 31 of the inlet 30. For example, when the direct-current power supply DC is attached to the inlet 30, the controller 80 receives an identification signal indicating that the direct-current power supply DC has been connected from the direct-current power supply DC through the common communication terminal 31 of the inlet 30. Further, when the alternating-current power supply AC is attached to the inlet 30, the controller 80 receives an identification signal indicating that the alternating-current power supply AC has been connected from the alternating-current power supply AC through the common communication terminal 31 of the inlet 30.

The controller 80 is connected to the switching unit 50, and controls the switching unit 50 on the basis of the identification signal received through the common communication terminal 31 of the inlet 30 and a voltage received from the terminal voltage sensor 71. For example, when the controller 80 has received the identification signal indicating that the direct-current power supply DC has been connected and an appropriate voltage of the direct-current power supply DC from the terminal voltage sensor 71, the controller 80 makes a switch to the DC power supply line L1 by turning ON the relays 51, 52 of the switching unit 50 and not driving the AC/DC conversion unit 60, and charges the battery 10 with power input to the inlet 30. On the other hand, when the controller 80 has received the identification signal indicating that the alternating-current power supply AC has been connected and an appropriate voltage of the alternating-current power supply AC from the terminal voltage sensor 71, the controller 80 makes a switch to the AC power supply line L2 by turning OFF the relays 51, 52 of the switching unit 50 and driving the AC/DC conversion unit 60, and charges the battery 10 with power input to the inlet 30. In this manner, the controller 80 charges the battery 10 on the basis of the identification signal output from each power supply and the voltage output from the terminal voltage sensor 71. Thus, it is possible to avoid an erroneous operation such as performing AC charging with the switching unit 50 kept ON.

Note that, when the controller 80 has received the identification signal indicating that the direct-current power supply DC has been connected and an inappropriate voltage of the direct-current power supply DC from the terminal voltage sensor 71, the controller 80 turns OFF the relays 51, 52 of the switching unit 50 and does not drive the AC/DC conversion unit 60. Further, when the controller 80 has received the identification signal indicating that the alternating-current power supply AC has been connected and an inappropriate voltage of the alternating-current power supply AC from the terminal voltage sensor 71, the controller 80 turns OFF the relays 51, 52 of the switching unit 50 and does not drive the AC/DC conversion unit 60. When the controller 80 has not received the identification signal indicating that the direct-current power supply DC or the alternating-current power supply AC has been connected, the controller 80 turns OFF the relays 51, 52 of the switching unit 50 and does not drive the AC/DC conversion unit 60.

Next, an operation example of the power supply device 1 will be described. FIG. 4 is a flowchart illustrating an operation example of the power supply device 1 according to the embodiment. The controller 80 determines whether an external charger has been connected to the inlet 30 (step S1). When the external charger has been connected to the inlet 30 (step S1; Yes) the controller 80 determines whether the direct-current power supply DC has been connected or the alternating-current power supply AC has been connected (step S2). For example, when the controller 80 has received the identification signal indicating that the direct-current power supply DC has been connected (step S2; Yes), the controller 80 determines whether an appropriate voltage of the direct-current power supply DC has been received from the terminal voltage sensor 71 (step S3). When the appropriate voltage of the direct-current power supply DC has been received from the terminal voltage sensor 71 (step S3; Yes), the controller 80 makes a switch to the DC power supply line L1 (step S4). For example, the controller 80 connects the inlet 30 and the battery 10 not through the AC/DC conversion unit 60 by switching the relays 51, 52 to ON to make a switch to the DC power supply line L1. Then, the controller 80 charges the battery 10 with power supplied from the direct-current power supply DC through the DC power supply line L1 (step S5).

When the controller 80 has received the identification signal indicating that the alternating-current power supply AC has been connected in step S2 described above (step S2; No), the controller 80 determines whether an appropriate voltage of the alternating-current power supply AC has been received from the terminal voltage sensor 71 (step S6). When the appropriate voltage of the alternating-current power supply AC has been received from the terminal voltage sensor 71 (step S6; Yes), the controller 80 makes a switch to the AC power supply line L2 (step S7). For example, the controller 80 connects the inlet 30 and the battery 10 through the AC/DC conversion unit 60 by switching the relays 51, 52 to OFF to make a switch to the AC power supply line L2. Then, the controller 80 charges the battery 10 with power supplied from the alternating-current power supply AC through the AC power supply line L2 (step S5) .

When no external charger has been connected to the inlet 30 in step S1 described above (step S1; No), the controller 80 is put on standby until an external charger is connected to the inlet 30. Further, when the appropriate voltage of the direct-current power supply DC has not been received from the terminal voltage sensor 71 in step S3 described above (step S3; No), the controller 80 notifies an error through a display unit, a voice output unit, or the like mounted on the vehicle V (step S8). Further, when the appropriate voltage of the alternating-current power supply AC has not been received from the terminal voltage sensor 71 in step S6 described above (step S6; No), the controller 80 notifies an error through the display unit, the voice output unit, or the like mounted on the vehicle V (step S9).

As described above, the power supply device 1 according to the embodiment is provided with the battery 10, the common power supply terminal 32, the AC/DC conversion unit 60, the DC power supply line L1, the AC power supply line L2, the switching unit 50, and the controller 80. The battery 10 is mounted on the vehicle V and stores power. The common power supply terminal 32 has a shape connectable in common to the power supply terminal (the positive electrode terminal Tp and the negative electrode terminal Tn) of the direct-current power supply DC installed outside the vehicle V and the power supply terminal (the first terminal T1 and the second terminal T2) of the alternating-current power supply AC installed outside the vehicle V. The common power supply terminal 32 is connected to either the power supply terminal (the positive electrode terminal Tp and the negative electrode terminal Tn) of the direct-current power supply DC or the power supply terminal (the first terminal T1 and the second terminal T2) of the alternating-current power supply AC to input power in charging. The AC/DC conversion unit 60 converts AC power input to the common power supply terminal 32 to DC power. The AC power supply line L2 connects the common power supply terminal 32 and the battery 10 through the AC/DC conversion unit 60. The DC power supply line L1 connects the common power supply terminal 32 and the battery 10 not through the AC/DC conversion unit 60. The switching unit 50 switches the path of current flowing from the common power supply terminal 32 to the battery 10 to either the DC power supply line L1 or the AC power supply line L2. The controller 80 controls the switching unit 50 on the basis of a result of determination whether the power supply connected to the common power supply terminal 32 is the direct-current power supply DC or the alternating-current power supply AC. For example, the controller 80 makes a switch to the DC power supply line L1 when the power supply connected to the common power supply terminal 32 is the direct-current power supply DC and makes a switch to the AC power supply line L2 when the power supply connected to the common power supply terminal 32 is the alternating-current power supply AC to charge the battery 10 with power input to the common power supply terminal 32.

This configuration enables the power supply device 1 to achieve commonality of the common power supply terminal 32 in the inlet 30 to which the direct-current power supply DC and the alternating-current power supply AC are attached, which enables downsizing of the inlet 30. For example, the power supply device 1 can halve the number of common power supply terminals 32 of the inlet 30, and thereby prevent an increase in the number of wires connected to the common power supply terminal 32. The power supply device 1 can improve the flexibility in the design of the vehicle V by downsizing the inlet 30 and reduce component costs. Further, the power supply device 1 can achieve downsizing of the connector C to be attached to the inlet 30. The power supply device 1 can achieve partial commonality between the AC power supply line L2 and the DC power supply line L1, which enables a reduction in the number of wires and weight reduction. In this manner, the power supply device 1 can prevent upsizing of the device and improve the wiring property. As a result, it is possible to selectively use the direct-current power supply DC and the alternating-current power supply AC in an appropriate manner.

The power supply device 1 described above is further provided with the common communication terminal 31. The common communication terminal 31 is connectable to the communication terminal Tc1 of the direct-current power supply DC and connectable to the communication terminal Tc2 of the alternating-current power supply AC, and inputs a signal from the direct-current power supply DC and the alternating-current power supply AC. The controller 80 receives the signal indicating whether the power supply connected to the common power supply terminal 32 is the direct-current power supply DC or the alternating-current power supply AC through the common communication terminal 31. This configuration enables the power supply device 1 to achieve commonality of the common communication terminal 31 in the inlet 30 to which the direct-current power supply DC and the alternating-current power supply AC are attached, which enables downsizing of the inlet 30. Accordingly, the power supply device 1 can prevent upsizing of the device and improve the wiring property.

### Modifications

Next, modifications of the embodiment will be described. Although there has been described an example in which the power supply device 1 is provided with the common communication terminal 31, the present invention is not limited thereto. The power supply device 1 may not be provided with the common communication terminal 31, but provided with separate communication terminals for the direct-current power supply DC and the alternating-current power supply AC.

Further, although there has been described an example in which the controller 80 receives the signal indicating whether the power supply connected to the common power supply terminal 32 is the direct-current power supply DC or the alternating-current power supply AC through the common communication terminal 31, the present invention is not limited thereto. For example, the controller 80 may receive the signal indicating whether the power supply connected to the common power supply terminal 32 is the direct-current power supply DC or the alternating-current power supply AC by wireless communication or through pressing of a push button.

Further, although there has been described an example in which the lock mechanism, for example, closes the opening with the cover to block the insertion of the connector C of the external charger into the opening, the present invention is not limited thereto. The lock mechanism may be implemented by another method.

The power supply device according to the present embodiment is capable of selectively using a direct-current power supply and an alternating-current power supply in an appropriate manner by making a switch to either the DC power supply line or the AC power supply line according to the type of the power supply connected to the common power supply terminal to charge the battery with power input to the common power supply terminal.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A power supply device (1) comprising:
a battery (10) mounted on a vehicle (V) and configured to store power;
a common power supply terminal (32) having a shape connectable in common to a power supply terminal (Tp, Tn) of a direct-current power supply (DC) installed outside the vehicle (V) and a power supply terminal (T1, T2) of an alternating-current power supply (AC) installed outside the vehicle (V), the common power supply terminal (32) being connected to either the power supply terminal (Tp, Tn) of the direct-current power supply (DC) or the power supply terminal (T1, T2) of the alternating-current power supply (AC) to input power in charging;
an AC/DC conversion unit (60) configured to convert AC power input to the common power supply terminal (32) to DC power;
an AC power supply line (L2) configured to connect the common power supply terminal (32) and the battery (10) through the AC/DC conversion unit (60);
a DC power supply line (L1) configured to connect the common power supply terminal (32) and the battery (10) not through the AC/DC conversion unit (60);
a switching unit (50) configured to switch a path of current flowing from the common power supply terminal (32) to the battery (10) to either the DC power supply line (L1) or the AC power supply line (L2); and
a controller (80) configured to control the switching unit (50) based on a result of determination whether a power supply connected to the common power supply terminal (32) is the direct-current power supply (DC) or the alternating-current power supply (AC), wherein
the controller (80) makes a switch to the DC power supply line (L1) when the power supply connected to the common power supply terminal (32) is the direct-current power supply (DC) and makes a switch to the AC power supply line (L2) when the power supply connected to the common power supply terminal (32) is the alternating-current power supply (AC) to charge the battery (10) with power input to the common power supply terminal (32).

2. The power supply device (1) according to claim 1, further comprising:
a common communication terminal (31) connectable to a communication terminal (Tc1) of the direct-current power supply (DC) and connectable to a communication terminal (Tc2) of the alternating-current power supply (AC), the common communication terminal (31) being configured to input a signal from the direct-current power supply (DC) and the alternating-current power supply (AC), wherein
the controller (80) receives a signal indicating whether the power supply connected to the common power supply terminal (32) is the direct-current power supply (DC) or the alternating-current power supply (AC) through the common communication terminal (31).
